## Europäisches Patentamt

(19) **European Patent Office**

Office européen des brevets

(11) Publication number: **0 116 619**
**B1**

(12)

# EUROPEAN PATENT SPECIFICATION

(45) Date of publication of patent specification: **11.11.87**

(51) Int. Cl.⁴: **G 02 B 6/44**

(21) Application number: **83902789.3**

(22) Date of filing: **15.08.83**

(86) International application number:
**PCT/US83/01253**

(87) International publication number:
**WO 84/00820 01.03.84 Gazette 84/06**

(54) HERMETICALLY SEALED OPTICAL FIBER TUBE, AS WELLAS AN ARMORED CABLE INCOPORATING SUCH TUBE.

(30) Priority: **17.08.82 US 408971**
**17.08.82 US 408972**

(43) Date of publication of application:
**29.08.84 Bulletin 84/35**

(45) Publication of the grant of the patent:
**11.11.87 Bulletin 87/46**

(84) Designated Contracting States:
**BE DE FR GB NL SE**

(56) References cited:
**DE-A-2 836 314**
**DE-A-2 920 428**
**GB-A-1 073 958**
**GB-A-1 438 074**
**GB-A-1 598 438**
**GB-A-2 029 048**
**GB-A-2 088 584**
**JP-A-56 125 708**
**US-A-2 706 376**
**US-A-4 117 300**

**Applied Optics, vol. 21, no. 5, 1 March 1982, N. Kojima et al.: "Submarine optical fiber cable: development and laying results", pages 815-821**

(73) Proprietor: **CHEVRON RESEARCH COMPANY**
**P.O. Box 7643**
**San Francisco, CA 94120 (US)**

(72) Inventor: **THOMPSON, Robert, Everette**
**3511 Center Driver, S.W.**
**Roanoke, VA 24018 (US)**
Inventor: **GOULD, Gordon**
**9101 Deer Park Road**
**Great Falls, VA 22066 (US)**
Inventor: **SOODAK, Charles, I.**
**204 Stonegate Drive**
**Silver Spring, MD 20904 (US)**

(74) Representative: **Kosmin, Gerald Emmanuel et al**
**HASELTINE, LAKE & CO. Hazlitt House 28**
**Southampton Buildings Chancery Lane**
**London, WC2A 1AT (GB)**

(56) References cited:
**Patents Abstracts of Japan, vol. 5, no. 202, 22 December 1981 page 874p95**

Courier Press, Leamington Spa, England.

## Description

This invention relates to optical fibers and armored cables. More specifically, this invention relates to hermetically sealed tubes containing optical fibers, and armored optical fiber cables incorporating such tubes.

Conventional electromechanical cables for applications such as oil well logging include insulated metal conductors for the transmission of electrical signals. Such cables have signal transmission bandwidths that are limited to about 100 KHz over lengths that correspond to typical depths of oil wells, 12,000 to 20,000 feet (3657.6 to 6096 m). Much of the information that is obtainable with modern logging tools is not retrievable from down the well bore due to the restricted signal bandwidth that is characteristic of state-of-the-art conventional logging cables. Consequently, a need exists to provide cables that have substantially higher signal transmission bandwidths, i.e. capacity, and/or greater transmission rates through long cable lengths without repeaters. Optical fibers can provide signal transmission bandwidths of about 100 MHz through lengths up to about 30,000 feet (9144 m). This is about three orders of magnitude higher than the insulated wires that are used in conventional cables for applications in harsh environments such as well logging.

Glass optical fibers have two properties which make it difficult to successfully incorporate them into strain cables which will be stretched when used or which will be used under water, particularly at high pressure and/or high temperature such as are found in an oil well drill hole. These properties are static fatigue degradation and microbending loss.

Silica glass fibers have small cracks (microcracks) on their surface. The depth of these microcracks can increase through a stress-accelerated chemical reaction between the silica glass and moisture, called static fatigue. The tensile strength of the glass fiber decreases substantially as the microcracks increase in depth. Glass is an elastic material with a high Young's modulus. Strain in a glass optical fiber generates tensile stress and results in static fatigue. Thus, glass optical fibers are not suitable for use under high strain (>0.5%) in the presence of moisture over extended periods of time. No plastic can provide adequate protection since water diffuses through all plastics to some degree.

Loss of light through small bends in the fiber (microbending losses) is described hereinafter. Optical fibers transmit light signals by the principle of total internal reflection. This principal depends upon the light rays being totally reflected back into the core region each time they impinge upon the core to cladding interface of the optical fiber. Total internal reflection can only occur when the angle of incidence between the rays and the core to cladding interface is below a certain critical value. Bending of an optical fiber causes some of the light which is propagating in the fiber core to impinge upon the core to cladding interface at angles of incidence greater than the critical value and to be refracted out of the optical core and lost. The amount of the light that is lost becomes greater as the effective diameter of the bend becomes smaller. When the bending of the optical fiber is caused by deflection due to local lateral forces, the resulting decrease in signal strength (and decrease in the length of the cable which can be used) is called microbending loss. When an optical fiber is deflected by a local inhomogeneity, such as a lump in its coating layers, the effective diameter of the bend depends upon the local strain the fiber is under. Generally, the fiber will bend to a smaller effective diameter as the strain level it is under increases. Consequently, higher strain levels result in higher levels of microbending loss. Microbending losses in fibers are greatly reduced by first coating the fibers with a soft elastomer such as silicone rubber, and encasing this buffered fiber in a rigid jacket which can withstand external forces. However, plastics such as silicone rubber lose their integrity under conditions encountered in harsh environments such as at the bottom of a deep well, i.e., when subjected to hot brine at pressures up to 20,000 psi ($1.38 \times 10^8$ Pa) and temperatures up to 500°F (260°C).

Thus, it would be desirable to have a hermetically sealed tube, containing at least one optical fiber, which can be incorporated into a well logging cable. The tube would minimize the microbending of the fiber and moisture-induced microcrack failure in the fiber.

Hermetically sealed tubes containing at least one optical fiber have already been proposed for different cable applications. GB—A—2.029.048, for example, discloses a hermetically sealed optical fiber tube for use in an optical fiber submarine cable, wherein said tube is made of a metal tape longitudinally wound on a tubular structure formed of at least two semicylindrical sections assembled together, and wherein the longitudinal edges of said tape are welded together.

GB—A—1.073.958 discloses besides an insulated electric cable comprising a hermetically sealed tube containing an insulated electrical conductor, wherein said tube is formed of two U-shaped metal strips welded together.

A necessary condition for accurate logging of a well bore is an accurate knowledge of the position of the logging tool within the well bore. The position of the tool is defined by the actual length of logging cable that is suspended in the well bore. The actual length of suspended cable can be determined from a knowledge of the amount of unstressed cable length that has been lowered into the well plus a knowledge of the elongation versus tension characteristics of the cable and the tension along the suspended cable length. The amount of unstressed cable length that has been lowered into the well bore can be precisely measured. The tension profile along the suspended length of cable can be accurately calculated. Therefore, the actual length of cable suspended in the well can be accurately determined if the elongation versus tension characteristics of the cable are accurately known and are repeatable.

Conventional electromechanical cables for well logging can be constructed to withstand harsh high temperature environments and to accept high levels of axial strain while still remaining functional. More specifically, for example, each conductor element in a conventional logging cable comprises a bundle of copper wires. The copper wires yield inelastically at low strain. When the cable is alternatively stretched and relaxed, the copper does not fully return to its original state and eventually the copper wires become brittle, due to strain hardening, and break. However, even this serious condition does not necessarily render the cable inoperable because a break in one or more wires with adjacent nonbroken wires permits the current to be passed to the neighboring wires and thus the conductor still appears whole and the cable remains functional. Thus, conventional logging cables can withstand considerable inelastic and elastic strain and still remain functional.

Well logging cables are generally constructed with two layers of external steel armor wires, see for example GB—A—2036361. The armor wires are preformed and applied in helices of opposing handedness to prevent the cable from unwinding when supporting a free hanging load. Inside the armored jacket can be seven insulated copper conductors laid six around one in helices generally of opposite handedness to those of the steel wires in the inner armor layer. However, there is no definite relationship between the helices of the copper conductors and those of the inner armor wires since they are added in separate fabrication steps and usually with a bedding layer of a pliant material therebetween. A result of this conventional cabling geometry is that the interface between the inner armor wires and the underlying insulated conductors consists of a multiplicity of cross-over points separated by the pliant bedding material.

When a conventional well logging cable is tensioned at elevated temperatures, it will elongate by an amount which is not accurately predictable. This is because the elongation consists of two parts, one that is linear and one that is highly nonlinear and inelastic. The inelastic part occurs because the armor wires inelastically deform the underlying compliant bedding and the wire insulation, due to very high local stresses at the crossover points, and take on a smaller pitch diameter. The inelastic part of the cable elongation is not very predictable or repeatable and consequently the position of the logging probe will not be accurately known.

In order to prevent inelastic strain from occurring in use, conventional logging cables are given a hot prestretch during fabrication. When properly conducted, the hot prestretch operation will result in a cable that exhibits a linear and elastic elongation in response to tension. The hot prestretching operation imparts a permanent (inelastic) strain of between 3/4 to 1 1/2 percent to conventional seven-conductor logging cables. Hot prestretching of a conventionally designed armored cable containing one or more optical fibers within its core would leave the glass optical fibers under a permanent elongation of 3/4 to 1 1/2 percent. Optical fibers in cables subject to these high permanent strain levels would soon fail from static fatigue and/or exhibit intolerably high microbending losses. It is apparent that conventional prestretching technology cannot be applied to armored optical fiber cables. Thus, it would be highly desirable to have an armored fiber optical cable which overcomes these and other difficulties and permits the expansion of optical fiber communications technology into area of harsh environments.

We have now found in accordance with the present invention that a core for an armored optical fiber cable which can effectively resist buckling under pressure and inelastic stretching when subjected to longitudinal elongation, relaxation and bending forces can be produced by surrounding one or more buffered optical fibers with a cylindrical metal tube composed of at least two metal sections hermetically joined together to form the tube, the metal sections having been preshaped by rolling from an annealed metal wire and being selected to have a yield strain greater than 0.85.

Hence the invention provides a method of fabricating a hermetically sealed tube around one or a plurality of buffered optical fibers and the product therefrom. Buffering refers to a process of coating the optical fiber with a suitable cushioning material such as an elastomer. The fabrication is performed so that the fibers are sealed in the tube without stretching them so as to avoid the introduction of strain, microbends, or water-enhanced microcracks. The tube can be further incorporated into an armored cable. The armored cable and method of fabrication minimize the inelastic part of the cable elongation by minimizing the deformability of the core. One such armored cable and method of fabrication are described in more detail in our copending Application No. 83902788.5 (Publication No. WO84/00819 or EP—A—0118494).

The central bundle of the cable comprises at least two inner layers, including the inner armor, which are stranded in a "unilay" configuration of a given handedness around our central hermetically sealed tube which contains at least one buffered fiber. A buffered optical fiber is an optical fiber coated with a suitable cushioning material such as an elastomer. The tube is fabricated so that the fibers are hermetically sealed therein with a minimum of process-induced strain and microbends.

A "unilay" configuration is defined as a cable bundle wherein each element is in continuous contact with, and in the same orientation with respect to its nearest neighbors. The cross-sections of the central bundle are identical at every point along the cable, except for a rotation about the central axis. The unilay construction distributes the transverse forces continuously along the touching components instead of concentrating the forces at crossover points as in contrahelically formed layers of cable elements or layers of unidirectionally cabled elements that have different lay lengths. The lay length of the cable is long, of the order of about 3.5 inches (8.89 cm) for a cable with an outside diameter of about 0.5 inch (1.27 cm). "Lay length" is defined as the distance along the cable or helical axis traversed by one complete helical revolution of the elements. The cable has at least one outer armor layer which is contrahelically wound around the central bundle. The outer armor layer is of opposite handedness to the central bundle and substantially balances the torque of the inner armor when the cable is under tension. The elements of the layers are hard and resistant to deformation. This means that any conductor elements contained in the cable are single metal conductors and not multifilament conductors.

The layers in the central bundle are fabricated in a single operation with the same lay length and with the same handedness. The outer armored layer of opposite handedness is applied directly over the central bundle.

Thus in accordance with one aspect of the invention, there is provided a hermetically sealed optical fiber tube for use in environments requiring resistance to buckling under pressure and inelastic stretching thereof when subjected to longitudinal elongation, relaxation and bending forces, said tube comprising an inner core having one or more buffered optical fibers and a cylindrical metal tube fitting around said inner, core characterised in that the tube comprises at least two metal sections hermetically joined together to form said tube, each metal section being preshaped by rolling from an annealed wire and having a yield strain greater than 0.85.

In accordance with another aspect of the invention, there is provided an armored optical cable incorporating a central hermetically sealed optical fiber tube in accordance with the invention and further comprising:

at least six substantially solid elements wound helically around said tube in a given handedness;

at least twice the number of said at least six elements of inner armor wires wound around and contacting said at least six elements of the same handedness in a unilay helical configuration, said at least six elements and said inner armor wires being fabricated around said tube at the same time wherein the elements and the wires of the same handedness and the tube form a central bundle; and

a plurality of outer armor wires contacting said inner armor wires, said outer armor wires being wound in an opposite helical handedness to the handedness of said inner armor wires such that the torques exerted by said inner armor wires and said outer armor wires are substantially balanced when under tension.

Reference will now be made, by way of example, to the accompanying drawing in which:

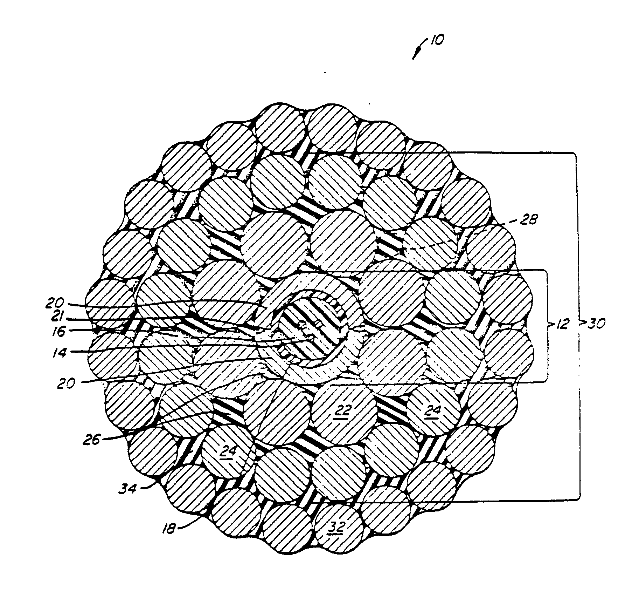

Figure 1 illustrates a cross-sectional view of an armored optical fiber cable.

In Figure 1 there is illustrated the hermetically sealed tube 12 and armored optical cable 10 of the present invention. The tube 12 and armored optical cable 10 will be described with respect to specific parameters such as overall size, dimensions and materials used to fabricate a well logging cable which comes within the scope of the invention. However, the invention is not intended to be limited solely to the specific dimensions or materials used in the description nor to only well-logging applications. The described tube and/or cable is useful in any application which requires minimum cable deformations under load. The tube can be used in any application which requires a hermetic environment for an optical fiber.

The armored optical cable 10 has a central core constituted by a hermetically sealed tube 12. This tube 12 can be used alone if the application does not require armoring or conductor elements. The hermetically sealed tube 12 has an outer diameter of between about 0.110 and about 0.120 inches (about 0.279 and about 0.305 cm) ± 1% with an inside diameter of about 0.06 inches (0.15 cm). The tube 12 includes one or a plurality of optical fiber(s) 14. The optical fibers 14 can be singlemode or multimode fibers, or mixtures thereof. Suitable optical fibers with a thin protective coating of a U.V. cured acrylic based plastic are manufactured by Valtec Co. in Massachusetts. If the hermetically sealed tube 12 includes a plurality of optical fibers, the optical fibers should preferably be stranded together with the same helical handedness as the elements 22 and the inner armor wires 24 of the central bundle 30 of the cable 10. For example, the three fibers illustrated have a right-handed lay sense and about a 3.5 inch (8.89 cm) lay length (1.2° lay angle).

The coated fibers are surrounded by and coated with a cushioning material 16 such as an elastomeric cushioning material, for example silicone elastomers and the like. Additional elastomer or other suitable flood material 18 is added to partially or as illustrated completely fill the tube 12 during the fabrication of the complete tube 12.

The tube 12 is fabricated from hemicylindrical sections 20 which are preshaped by rolling from an annealed wire. Although two sections 20 are illustrated, the tube 12 can be formed from any number of sections. A suitable wall thickness for two sections would be about 0.0270 ± .002 inches (0.0686 ± .005 cm). The rolling of the cylindrical sections work hardens the metal before the fiber is enclosed therein. The cylindrical sections are made from steel or other alloy wire which can optionally be precipitation hardened to yield a high yield strength by heat treatment before welding. Precipitation hardening is defined as a process of hardening in which a constituent precipitates from a supersaturated solid solution. Thus the work hardened metal may be further enhanced in yield strength by precipitation hardening. Suitable standard rolling machines and processes such as those used by the Shaped Wire Co. of Illinois, can be used to squeeze wire into the hemicylindrical sections 20 which form the tube 12. Suitable examples of stainless steel wire or other suitable material are 17—7 PH stainless steel, a product of Armco, and MP—35 nonferrous alloy, a product of Latrobe Steel Co., Latrobe, PA. The sections formed from the wires are preferably precipitation hardened to have a yield stress greater than about 250,000 psi (1.724 GPa). This corresponds to greater than about 0.85 yield strain. Yield strain is defined as the maximum strain that can be applied without substantial permanent deformation of the test specimen. This permits the tube to run over about a 36 inch (91 cm) and preferably a 24 inch (61 cm) diameter or less sheave or wound around a 36 inch (91 cm) and preferably a 24 inch (61 cm) diameter or less cable reel barrel under working load without yielding inelastically.

The sections 20 fit together longitudinally to form the tube 12. The longitudinal seams are subjected to only small secondary shear stress when the tube is bent over a sheave or spool. The sections 20 are pressed together and welded where the edges meet by welds 21 to hermetically seal the fibers 14 therein. During the fabrication of the tube, the stranded and buffered fibers are fed between the cylindrical sections as they come together with enough clearance to avoid pinching. The welding is pereferably done with laser welding which makes a clean melt which can be confined to a small volume which does not penetrate all the way through the wall, and therefore does not anneal the whole wall thickness and does not destroy the buffered fibers. Optionally, for further protection, the completed tube can be coated with a hard plastic of a suitable material such as polyvinylidene difluoride (Kynar®) or polyetheretherketone (PEEK®), or galvanized. This optional coating is adjusted so that the final hermetically sealed tube has an outside diameter of about 0.120 inches (0.305 cm).

An alternative tube structure contains sections with dove-tail ends so that they securely fit within each other. Outside the cylindrical sections is a roll formed and welded metal tube. The metal tube is laser welded along the roll formed tube seam with a suitable laser such as a $CO_2$ laser. The tube is preferably fabricated from an extremely corrosion resistant material such as Inconel®. Optionally, the depth of the laser weld during welding can be adjusted so that the weld passes through the outer metal tube and into one of the inner tube halves. This securely hermetically seals the optical fibers within the tube. An alternative option is to dip or plate the outer covering with suitable material which resists corrosion. This tube is illustrated in U.S. Patent Application 408,971, filed August 17, 1982 and entitled "Hermetically Sealed Optical Fiber" by Gordon Gould, Robert Everette Thompson, and Charles I. Soodak (now US—A—4504112).

In the preferred embodiment, the space for the central hermetically sealed tube 12 is formed by at least six elements 22, such as conductor strands, layed around the central core 12 with a right-handed lay sense and a 3.5 inch (8.89 cm) lay length (9.8° lay angle). To obtain a larger diameter for the central core 12, more conductor strands, e.g. eight, as illustrated, are used to fabricate the space for the central core 12. The conductor strands 22 should be fabricated from material which minimizes deformation and is capable of interlocking with the inner armor 24. Suitable conductor strands are solid copperplated steel wire having a diameter of about 0.0403 inch (0.1024 cm) ± 1%. The conductor strands should have a minimum conductivity of 60% minimum of International Annealed Copper Standard (IACS) with a yield strain of about 0.9% minimum at 0.2% offset. A material meeting these requirements is Copperweld®. The solid copperplated steel wire is coated with an insulator such as Kynar® to an outer diameter of about 0.071 inches (0.180 cm). The hermetically sealed tube 12 and the conductor strands 22 should have a combined outer diameter of about 0.262 inches (0.665 cm).

Inner armor wires 24 surround the conductor strands 22, there being at least twice the number of inner armor wires as there are conductor strands. In this preferred embodiment, sixteen inner armor wires 24 should be of a drawn, galvanized, improved plow steel rope wires (AISI) or other suitable material with a diameter of about 0.0575 inches (0.1461 cm) ±1%, minimum tensile strength of about 244 KPSI (1.68 GPa), minimum torsions (8") (20.3 cm) of about 39, a coating adherence as evidenced by a 3D mandrel wrap test. The inner armor wires 24 are layed as part of the central bundle 30 with a right-handed lay sense and a 3.5 inch (8.89 cm) lay length (15.5° lay angle). The central bundle 30 has an outside diameter of about 0.368 inches (0.935 cm). It is important that the sixteen inner armor wires 24 be electro-galvanized with bright and smooth finishes such as a minimum-zinc coating of about 0.2 oz./ft² (61.03 g/m²). The inner armor wires 24 lie adjacent to the insulated conductors 22 and hence must provide a smooth interface for transferring compressive loads to the insulated wires.

A suitable protective material 26 for the intended environment of the cable 10 is applied during the fabrication of the central bundle 30 out to the inner armor 24. Suitable materials for a well logging cable are nitrile rubber based filling compounds and the like. The inner armor wires 24 are wound around the conductor strands 22 as illustrated to provide room for eight interstitial elements 28. The eight interstitial elements 28 are optional and can be either a corrosion inhibitor lubricant 26, such as TMS 5878 compound, a product of Quaker Chemical Company, or wires or insulated conductors or jacketed optical fibers. The interstitial elements 28 are layed with the same lay sense as conductor strands 22 and inner armor wires 24. The interstitial elements 28 are cabled with a right-handed lay sense and a 3.5 inch (8.89 cm) lay length (12.5° lay angle). The interstitial elements 28 must have a maximum outside diameter of about 0.028 inches (0.071 cm) minimum zinc coating of about 0.1 oz./ft$^2$ (30.52 g/m$^2$), minimum tensile strength of about 251 KPSI (1.73 GPa), minimum torsions (8″) (20.3 cm) of about 83, and a coating adherence as evidenced by 2D mandrel wrap test. If the interstitial elements 28 are used to control the placement of the inner armor wires 24, then the elements 28 should preferably be solid, bright, galvanized wires. It is important that any interstitial elements 28 have a rounded and smooth external surface since they lie adjacent to the insulated conductor strands and must provide a smooth surface for transferring compressive loads to the insulated strands.

A unique feature of the armored optical cable 10 is the fact that the elements of the central bundle 30 are fabricated with the same lay length and handedness so that they nestle together and do not crossover each other. Another unique feature is the fact that the conductor strands 22 and the inner armor wires 24 are assembled in the same operation so that the elements 22 and 24 rest on each other and not in the grooves formed between the conductor strands 22. This construction gives the cable greater flexibility and reduces friction between the conductor strands 22 and the inner armor wires 24. These features provide for minimal deformation of the interface between the elements and hence minimal inelastic elongation of the cable.

Surrounding the inner armor wires 24 and forming the outside diameter of the cable 10 is at least one layer of outer armor wires. Illustrated in the preferred embodiment are twenty-four strands of outer armor wires 32. The outer armor wires 32 should be fabricated from galvanized, improved plow steel rope wires (AISI) or other suitable materials having about a 0.049 inch (0.124 cm) diameter ±1%, minimum zinc coating of about 0.4 oz./ft$^2$ (122.06 g/m$^2$), test per ASTM A—90, minimum tensile strength of about 246 KPSI (1.70 GPa), test per ASTM E—8, mimimum torsions (8″) 20.3 cm) of about 47, test per FED SPEC RR—W—410, and an adherence coating meeting ASTM A—641 using a 3D mandrel. The wires 32 are preferably preformed and layed with a lay sense opposite that of elements 22 and 24. For this example, the lay handedness of the outer armor wires 32 should be a left-handed lay sense and a 3.5 inch (8.89 cm) lay length (20.5° lay angle). As the outer armor wires 32 are being applied the central bundle 30 is coated with a corrosion-resistant and lubricating material 34 such as TMS 5878, and the like. The overall dimensions of the optical cable 10 will be about 0.469 inches (1.191 cm).

The armored cable containing the hermetically sealed tube is fabricated by first forming the tube in one operation and thereafter fabricating the cable around the tube in one in-line operation.

The hermetically sealed tube containing the optical fibers can be fabricated according to the following procedure. Annealed stainless steel or other suitable nonferrous alloy wires are rolled by shaped rollers into cylindrical sections such that upon passing through guide rollers the sections form a tube having a sufficient internal diameter to contain the optical fibers without pinching the fibers. The rolled sections are then precipitation hardened at a temperature of about 900°F (482°C). Preferably, the tube is formed of only two hemicylindrical sections because this minimizes the number of welds. Suitable rolled sections are obtained from The Shaped Wire Co., St. Charles, Illinois. Cylindrical sections can be pressed together by standard pressing rollers such as used by Laser Applications Inc., Baltimore, Md. prior to and during the laser welding. The helically wound coated fibers are inserted between the sections as they are squeezed together and additional elastomeric material is added to adhere the fibers thereto prior to welding.

The laser welding is performed with a 500 watt industrial $CO_2$ laser of Control Laser Corp. The laser is focused to a width of about 0.15 mm. The tube is welded to a depth which is less than the thickness of the sections. A depth of about 0.40 mm is suitable in the fabrication of an outside tube having a diameter of about 0.110—0.120 inches (0.279—0.305 cm). Optionally, the cylindrical sectors may be heated to between 300°F (149°C) and about 500°F (260°C) during welding. The heating facilitates the welding process and also results in up to about 0.2% contraction of the tube when it cools. This obviates up to about 0.2% stretch of the fiber due to thermal expansion when the cable is lowered in a drill hole experiencing temperatures on the order of up to about 500°F (260°C).

The welding process leaves the seams in a strained condition, a heat treatment at about 500°F (260°C) for a few hours after welding relieves such strains without annealing the precipitation hardened tube. Precipitation hardening the tube is not possible once the optical fiber is enclosed therein because this overheats and destroys the buffering polymers. After welding, the tube can optionally be nickel plated or galvanized to resist corrosion and finally the tube may optionally be covered with an extrusion of a high melting point plastic such as PEEK® or Kynar® to minimize the diffusion of brine into any pin holes left after welding and also to protect the metal from corrosion. Suitable extrusions are made by the Berk Tek Co. of Pennsylvania.

After the fabrication of the tube 12, the central bundle 30 is formed from one bay of planetary bobbins and the outer armor wires 32 are applied directly over the central bundle 30 from a tandem bay of planetary bobbins. The outer armor wires 32 are applied in an opposite handedness such that the torques exerted by said inner and outer armor wires are substantially balanced. A suitable method of balancing the contrahelically wound outer armor wires 32 and the inner armor wires 24 is disclosed in U.S. Patent No. 4,317,000. the machines which fabricate the cable of our invention are known in the art as planetary cabling machines. A suitable source for the fabrication of the cable is Blake Wire and Cable Company of Torrence, California. Of course, the cable can also be fabricated by a tube winder cabling machine; however, the outer armor wires will have to be applied in a separate step.

Having described the invention with respect to a particularly preferred embodiment and some preferred alternatives, it would be understood that the invention is not intended to be limited solely to the description therein. Modifications which would be obvious are intended to be within the scope of the invention. For example, the cable is not limited to any specific diameter, number of optical fibers, and the like. A different environment or job application which required a larger load placed on the cable could require a larger diameter cable with larger and/or more conductor strands, inner armor wires or outer armor wires. In addition, the lay length must be increased, in direct proportion, as the diameter of the cable increases. Furthermore, it is necessary that the conductor strands and the inner armor are fabricated in one operation with the same handedness and the inner armor is set up so as not to lie in the grooves formed by the conductor strands. The outer armor must be wound in opposite handedness to the inner armor and of sufficient compressive strength such that the inner armor and the outer armor are substantially torque balanced.

**Claims**

1. A hermetically sealed optical fiber tube for use in environments requiring resistance to buckling under pressure and inelastic stretching thereof when subjected to longitudinal elongation, relaxation and bending forces, said tube comprising an inner core (16, 18) having one or more buffered optical fibers (14) and a cylindrical metal tube (12) fitting around said inner core (16, 18), characterised in that the cylindrical metal tube (12) comprises at least two metal sections (20) hermetically joined together to form said tube (12), each metal section (20) being preshaped by rolling from an annealed metal wire and selected to have a yield strain greater than 0.85.

2. A tube according to Claim 1, wherein said metal sections are precipitation hardened sections.

3. A tube according to Claim 1 or 2, wherein said metal sections (20) are formed of stainless steel or nonferrous alloy.

4. A tube according to Claim 1, 2 or 3, wherein said metal sections are hermetically joined at longitudinal seams.

5. A tube according to Claim 3, wherein the sections (20) are fabricated such that the rolled shaped wires form a tube (12) having an outer diameter of from 0.110 to 0.120 inches (0.279 to 0.305 cm) with a wall thickness of about 0.027 inches (0.069 cm) and an inside diameter of about 0.06 inches (0.15 cm).

6. A tube according to Claim 4, wherein the cylindrical metal tube (12) is formed from two sections (20).

7. A tube according to Claim 5, wherein the cylindrical metal tube (12) is coated with a corrosion resistant metal layer or high temperature plastic to an outer diameter of about 0.120 ± 0.001 inches (0.305 ± 0.0025 cm).

8. A tube according to Claim 4, wherein the metal sections (20) have been joined together by laser welding.

9. A tube according to Claim 3 or 4, wherein the cylindrical metal tube (12) is provided with an outer coating of a roll formed metal tube, said outer metal tube being welded to a depth greater than the thickness of said outer metal tube.

10. A tube according to Claim 5 or 7, wherein the optical fibers are single mode optical fibers.

11. An armored optical fiber cable incorporating a central tube according to Claim 1, 2, 3, 8, 9 or 10 and further comprising:

at least six substantially solid elements (22) wound helically around said central tube (12) in a given handedness;

at least twice the number of said at least six elements of inner armor wires (24), wound around and contacting said at least six elements (22) in a unilay helical configuration in the same handedness, said unilay helical configuration being obtainable by assembling said at least six elements (22) and said inner armor wires (24) around said tube (12) at the same time, wherein the elements (22) and the inner wires (24) of the same handedness and the tube (12) form a central bundle (30); and

a plurality of outer armor wires (32) contacting said inner armor wires (24), said outer armor wires (32) being wound in an opposite helical handedness to the handedness of said inner armor wires (24) such that the torques exerted by said inner armor wires and said outer armor wires are substantially balanced when under tension.

12. A cable according to Claim 11, wherein said at least six elements (22) are conductor strands of a copper plated steel wire conductor.

13. A cable according to Claim 12, wherein the inner armor wire (24) is galvanized steel wire.

14. A cable according to Claim 13, wherein the conductor strands (22) and the inner armor wires (24) form interstitial spaces (28) which are occupied by jacketed optical fibers, or galvanized steel wire fillers.

15. A cable according to Claim 14, wherein the outer armor wires (32) are galvanized, preformed, plough steel wires.

16. A cable according to Claim 15, wherein said at least six elements (22) are eight elements.

17. A cable according to Claim 11, 14, 15 or 16, wherein the central tube (12), conductor strands (22) and inner armor wires (24) are coated with a nitrile rubber based filling compound (26).

18. An armored optical cable as claimed in Claim 11 and comprising:

a central substantially round hermetically sealed tube (12) having an outer diameter of between 0.110 and 0.120 inches (0.279 to 0.305 cm), and an inner diameter of about 0.06 inches (0.15 cm), said tube (12) including therein a plurality of optical fibers (14) embedded in an elastomer (16, 18);

eight substantially round conductor strands (22) wound around said central tube (12) with a right hand lay and about a 3.5 inch (8.89 cm) lay length and a diameter of 0.071 inches (0.180 cm) such that the outer diameter of the central tube and the conductor strands is about 0.262 inches (0.665 cm);

sixteen substantially round inner armor strands (24) of galvanized steel wire having an outer diameter of about 0.058 inches (0.147 cm) wound around and contacting said conductor strands (22) in the same handedness and lay length as said conductor strands, said conductor strands and said inner armor wires being fabricated in the same operation, wherein said central tube (12), said conductor strands (22) and said inner armor wires (24) form a central bundle (30) having an outer diameter of about 0.368 inches (0.935 cm); and

twenty-four substantially round outer strands (32) of galvanized steel wire wound around and contacting said sixteen strands (24) in a left hand lay with a 3.5 inch (8.89) lay length, said twenty-four strands having a diameter of about 0.049 inches (0.124 cm) such that the total cable diameter has an outside diameter of about 0.469 inches (1.191 cm).

19. A cable according to Claim 18, wherein the central bundle (30) is filled with an elastomeric filling compound (26).

20. A cable according to Claim 19, wherein the interstices formed between said inner armor strands (24) and outer armor strands (32) are filled with solid bright galvanized wires and/or a corrosion inhibitor-lubricant.

21. A cable according to Claim 20, wherein said tube (12) is further coated with a corrosion resistant metal layer or high temperature plastic to an outer diameter of about 0.120 ± 0.002 inches (0.305 ± 0.005 cm).

22. A cable according to Claim 21, wherein the metal sections (20) have been joined together by laser welding.

23. A process for fabricating a hermetically sealed optical fiber tube, comprising:

(a) rolling at least two annealed metal wires into metal sections (20) having a yield strain greater than 0.85, said sections (20) being capable of fitting together to form a cylindrical metal tube (12) having an inner diameter sufficient to accept at least one buffered optical fiber (14);

(b) forming such a tube (12) around one or more buffered optical fibers (14) from the metal sections (20) of step (a); and

(c) joining hermetically together said sections (20) to form said hermetically sealed tube (12).

24. A process according to Claim 23, wherein the joining is performed by laser welding.

25. A process according to Claim 24, wherein the tube (12) containing the fibers (14) is heated to between 300 and 500°F (149 and 260°C) during the joining of the metal sections.

26. A process according to Claim 23, 24 or 25, wherein said sections undergo precipitation hardening prior to being hermetically joined to increase the yield strength of the finished sections.

27. A process according to Claim 23, 24, 25 or 26, wherein the annealed wires for forming the metal sections (20) are made from stainless steel or a high tensile nonferrous alloy.

28. A process according to any one of Claims 23 to 27 and further comprising injecting an elastomer into a section (20) and onto said buffered fibers (14) prior to forming the said tube (12).

29. A process according to any one of Claims 23 to 28 and further comprising forming a high temperature resistant plastic coating around said hermetically sealed tube (12).

30. A process for fabricating an armored optical cable incorporating a central hermetically sealed optical fibre tube, comprising the process according to any one of Claims 23 to 29 and further comprising:

winding conductor elements (22) helically around said tube (12), said winding being of a given handedness and lay length;

winding a layer of inner armor wires (24) of the same handedness as said conductor elements (22) and with the same lay length and applied at the same time as said conductor elements, helically around said conductor elements (22); and

fabricating a layer of outer armor wires (32) of opposite handedness to that of said layer of inner armor wires (24) and with such a lay length that the torques exerted by said inner and outer armor wires are substantially balanced when the cable is under tension.

31. A process according to Claim 30, wherein the fabrication further comprises laying down cable elements in the interstitial space formed between said conductor elements (27) and said layer of inner armor wires (24) at the same time as said conductor elements (22) and said layer of inner armor wires (24) are being formed.

**Patentansprüche**

1. Hermetisch verschlossenes optisches Faserrohr zur Verwendung in einer Umgebung, die Widerstandsfähigkeit gegen Knickung unter Druck und unelastisches Strecken hiervon erfordern, wenn sie einer Längung in Längsrichtung, Relaxation und Biegekräften ausgesetzt sind, wobei dieses Rohr einen inneren Kern (16, 18) mit einer oder mehreren gepufferten optischen Faser(n) (14) sowie ein zylindrisches metallische Rohr (12) umfaßt, das um diesen inneren Kern (16, 18) paßt, dadurch gekennzeichnet, daß das zylindrische matallische Rohr (12) wenigstens zwei metallische Abschnitte (20) umfaßt, die hermetisch unter Bildung dieses Rohres (12) miteinander verbunden sind, wobei jeder metallische Abschnitt (20) durch Walzen aus einem geglühten Metalldraht vorgeformt und so gewählt ist, daß sie eine Bruchdehnung von mehr als 0,85 aufweisen.

2. Rohr nach Anspruch 1, dadurch gekennzeichnet, daß die metallischen Abschnitte ausscheidungsgehärtete Abschnitte sind.

3. Rohr nach Anspruch 1 oder 2, dadurch gekennzeichnet, daß die metallischen Abschnitte (20) aus rostfreiem Stahl oder nicht eisenhaltigen Legierungen gebildet sind.

4. Rohr nach Anspruch 1, 2 oder 3, dadurch gekennzeichnet, daß diese metallischen Abschnitte hermetisch an ihren in Längsrichtung verlaufenden Saumnähten verbunden sind.

5. Rohr nach Anspruch 3, dadurch gekennzeichnet, daß die Abschnitte (20) derart hergestellt sind, daß die gewalzten geformten Drähte ein Rohr (12) mit einem Außendurchmesser zwischen 0,279 bis 0,305 cm (0,110 bis 0,120 englische Zoll) mit einer Wanddicke von 0,069 cm (0,027 englische Zoll) und einem Innendurchmesser von etwa 0,15 cm (0,06 englische Zoll) bilden.

6. Rohr nach Anspruch 4, dadurch gekennzeichnet, daß das zylindrische metallische Rohr (12) aus zwei Abschnitten (20) gebildet ist.

7. Rohr nach Anspruch 5, dadurch gekennzeichnet, daß das zylindrische metallische Rohr (12) mit einer korrosionsbeständigen Metallschicht oder einem Hochtemperaturkunststoff bis auf einen Außendurchmesser von etwa 0,305 ± 0,0025 cm (0,120 ± 0,001 englische Zoll) überzogen ist.

8. Rohr nach Anspruch 4, dadurch gekennzeichnet, daß die metallischen Abschnitte (20) durch Laserverschweißung miteinander verbunden sind.

9. Rohr nach Anspruch 3 oder 4, dadurch gekennzeichnet, daß das zylindrische metallische Rohr (12) mit einem äußeren Überzug aus einem gewalzten metallischen Rohr versehen ist, wobei dieses äußere metallische Rohr bis auf eine Tiefe größer als die Dicke dieses äußeren metallischen Rohres verschweißt ist.

10. Rohr nach Anspruch 5 oder 7, dadurch gekennzeichnet, daß die optischen Fasern solche eines einzigen Schwingungstyps bzw. sog. Single-Mode-Fasern sind.

11. Verstärktes optisches Faserkabel mit einem mittigen Rohr nach einem der Ansprüche 1, 2, 3, 8, 9 oder 10, weiter umfassend:

wenigstens sechs im wesentlichen feste Elemente (22), die spiralförmig um dieses mittige Rohr (12) in einer gegebenen Handhabung (Sinn) gewickelt sind;

wenigstens die doppelte Anzahl dieser wenigstens sechs Element aus inneren Verstärkungsdrähten (24), die um diese wenigstens sechs Elemente (22) in einer einlagigen Spiralkonfiguration von gleichem Sinn gewickelt sind und diese kontaktieren, wobei diese einlagige Spiralkonfiguration erreichbar ist, indem diese wenigstens sechs Elemente (22) und diese inneren Verstärkungsdrähte (24) um dieses Rohr (12) gleichzeitig zusammengefaßt werden, wobei die Elemente (22) und die inneren Drähte (24) vom gleichen Handhabungssinn sowei das Rohr (12) ein mittiges Bündel (30) bilden; und

eine Vielzahl äußerer Verstärkungsdrähte (32), welche diese inneren Verstärkungsdrähte (24) kontaktieren, wobei diese äußeren Verstärkungsdrähte (32) in entgegengesetztem Spiralsinn zum Spiralsinn dieser inneren Verstärkungsdrähte (24) gewickelt sind, derart, daß die durch diese inneren Verstärkungsdrähte und diese äußeren Verstärkungsdrähte ausgeübten Momente im wesentlichen, wenn sie unter Spannung sind, ausgeglichen sind.

12. Kabel nach Anspruch 11, dadurch gekennzeichnet, daß wenigstens sechs Elemente (22) Leiterstränge eines kupferplattierten Stahldrahtleiters sind.

13. Leiter nach Anspruch 12, dadurch gekennzeichnet, daß der innere Verstärkungsdraht (24) ein galvanisierter Stahldraht ist.

14. Kabel nach Anspruch 13, dadurch gekennzeichnet, daß die Leiterstränge (22) sowie die inneren Verstärkungsdrähte (24) Zwischenräume (28) bilden, die von ummantelten optischen Fasern oder galvanisierten Stahldrahtfüllern eingenommen sind.

15. Kabel nach Anspruch 14, dadurch gekennzeichnet, daß die äußeren Verstärkungsdrähte (32) galvanisierte vorgeformte Patentstahldrähte sind.

16. Kabel nach Anspruch 15, dadurch gekennzeichnet, daß diese wenigstens sechs Elemente (22) acht Elemente sind.

17. Kabel nach Anspruch 11, 14, 15 oder 16, dadurch gekennzeichnet, daß das mittige Rohr (12), die Leiterstränge (22) sowie die inneren Verstärkungsdrähte (24) mit einer Füllermasse (26) auf Nitrilkautschukbasis überzogen sind.

18. Verstärktes optisches Kabel nach Anspruch 11, umfassend:

ein mittiges im wesentlichen rundes hermetisch abgedichtetes Rohr (12) mit einem Außendurchmesser zwischen 0,279 bis 0,305 cm (0,110 bis 0,120 englische Zoll) und einem Innendurchmesser von etwa 0,15 cm (0,06 englische Zoll), wobei dieses Rohr (12) hierin eine Vielzahl optischer in ein Elastomer (16, 18) eingebetteter Fasern (14) umfaßt;

acht im wesentlichen runde Leiterstränge (22), die um dieses mittige Rohr (12) im rechtlagigen Sinn und um eine 8,89 cm Lagenlänge (3, 5 englishe Zoll) und einen Durchmesser von 0,180 cm (0,071 englische Zoll) derart gewickelt sind, daß der Außendurchmesser des mittigen Rohres und die Leiterstränge etwa 0,665 cm (0,262 englische Zoll) beträgt;

sechzehn im wesentlichen runde innere Verstärkungsstränge (24) galvanisierten Stahldrahts mit einem Außendurchmesser von etwa 0,147 cm (0,058 englische Zoll), die um diese Leiterstränge (22) im gleichen Sinn und von der gleichen Lagenlänge wie diese Leiterstränge gewickelt sind und diese kontaktieren, wobei die Leiterstränge und diese Verstärkungsdrähte im gleichen Vorgang hergestellt werden, wobei dieses mittige Rohr (12), diese Leiterstränge (22) und diese inneren Verstärkungsdrähte (24) ein mittiges Bündel (30) mit einem Außendurchmesser von etwa 0,935 cm (0,368 englische Zoll) bilden; und

vierundzwanzig im wesentlichen runde äußere Stränge (32) galvanisierten Stahldrahts, die um diese sechzehn Stränge (24) im linken Wicklungssinn gewickelt sind und diese kontaktieren bei einer Lagenlänge 8,89 cm (3,5 englische Zoll), wobei diese vierundzwanzig Stränge einen Durchmesser von etwa 0,124 cm (0,049 englische Zoll) derart aufweisen, daß der gesamte Kabeldurchmesser einen Außendurchmesser von etwa 1,191 cm (0,469 englische Zoll) aufweist.

19. Kabel nach Anspruch 18, dadurch gekennzeichnet, daß das mittige Bündel (30) mit einer elastomeren Füllermasse (26) gefüllt ist.

20. Kabel nach Anspruch 19, dadurch gekennzeichnet, daß die zwischen diesen inneren Verstärkungssträngen (24) und den äußeren Verstärkungssträngen (32) gebildeten Zwischenräume gefüllt sind mit glanzverzinkten Drähten und/oder einem Korrosionsinhibitorschmiermittel.

21. Kabel nach Anspruch 20, dadurch gekennzeichnet, daß das Rohr (12) weiter mit einer korrosionsbeständigen Metallschicht oder einem Hochtemperaturkunststoff bis auf einen Außendurchmesser von etwa 0,305 ± 0,005 cm (0,120 ± 0,002 englische Zoll) überzogen ist.

22. Kabel nach Anspruch 21, dadurch gekennzeichnet, daß die metallischen Abschnitte (20) durch Laserschweißen vereinigt sind.

23. Verfahren zum Herstellen eines hermetisch versiegelten optischen Faserrohrs umfassend:

(a) Walzen wenigstens zweier geglühter metallischer Drähte in metallische Abschnitte (20) mit einer Bruchdehnung von mehr als 0,85, wobei diese Abschnitte (20) in der Lage sind, unter Bildung eines zylidrischen metallischen Rohrs (12) zusammenzupassen, das von einem Innendurchmesser ist, der ausreicht, um wenigstens eine gepufferte optische Faser (14) anzunehmen;

(b) Formen eines solchen Rohres (12) um eine oder mehrere gepufferte optische Fasern (14) aus den metallischen Abschnitten (20) der Stufe (a); und

(c) hermetische Verbindung dieser Abschnitte (20) zur Bildung dieses hermetisch abgedichteten Rohres (12).

24. Verfahren nach Anspruch 23, dadurch gekennzeichnet, daß die Verbindung durch Laserschweißung hergestellt ist.

25. Verfahren nach Anspruch 24, dadurch gekennzeichnet, daß das die Fasern (14) enthaltende Rohr (12) auf zwischen 149 bis 260°C (300 bis 500°F) während der Vereinigung der metallischen Abschnitte erwärmt wird.

26. Verfahren nach Anspruch 23, 24 oder 25, dadurch gekennzeichnet, daß diese Abschnitte eine Ausscheidungshärtung erleiden, bevor sie hermetisch zur Steigerung der Streckgrenze der fertigen Abschnitte vereinigt werden.

27. Verfahren nach Anspruch 23, 24, 25 oder 26, dadurch gekennzeichnet, daß die geglühten Drähte zur Bildung der metallischen Abschnitte (20) aus rostfreiem Stahl oder einer hochzugfesten Nicht-Eisenlegierung bestehen.

28. Verfahren nach einem der Ansprüche 23 bis 27 und weiter umfassend das Einspritzen eines Elastomers in einen Abschnitt (20) und auf diese gepufferten Fasern (14) vor dem Formen dieses Rohres (12).

29. Verfahren nach einem der Ansprüche 23 bis 28 und weiter umfassend die Bildung eines hochtemperaturbeständigen Kunststoffüberzugs und dieses hermetisch abgedichtete Rohr (12).

30. Verfahren zur Herstellung eines verstärkten optischen Kabels, wobei ein mittiges hermetisch abgedichtetes optisches Faserrohr eingebaut wird, umfassend das Verfahren nach einem der Ansprüche 23 bis 29 und weiter umfassend:

Wickeln der Leiterelemente (22) spiralförmig um dieses Rohr (12), wobei das Wickeln mit einem gegebenen Sinn und einer gegebenen Lagenlänge vorgenommen wird;

Wickeln einer Lage von inneren Verstärkungsdrähten (24) mit dem gleichen Steigungssinn wie diese Leiterelemente (22) und mit der gleichen Lagenlänge und unter Aufbringung gleichzeitig wie diese Leiterelemente, spiralförmig um diese Leiterelemente (22); und

Herstellen einer Lage äußerer Verstärkungsdrähte (32) mit einem Steigungssinn entgegengesetzt zu dem der Lage von inneren Verstärkungsdrähten (24) und mit einer Lagenlänge derart, daß die von diesen inneren und äußeren Verstärkungsdrähten ausgeübten Momente im wesentlichen ausgeglichen werden, wenn das Kabel unter Spannung steht.

31. Verfahren nach Anspruch 10, dadurch gekennzeichnet, daß die Herstellung weiterhin umfaßt: Ablegen von Kabelelementen in den Zwischenraum, der zwischen diesen Leiterelementen (27) und dieser Schicht innerer Verstärkungsdrähte (24) gebildet ist, und zwar zur gleichen Zeit wie diese Leiterelemente (22) und diese Lage aus inneren Verstärkungsdrähten (24) geformt werden.

**Revendications**

1. Tube à fibres optiques, scellé hermétiquement, destiné à être utilisé dans des milieux exigeant une résistance au flambage sous pression et à son étirage inélastique lorsqu'il est soumis à un allongement longitudinal, à une relaxation et à des forces de flexion, ledit tube comprenant une âme intérieure (16, 18) comportant une ou plusieurs fibres optiques tamponnées (14) et un tube métallique cylindrique (12) s'ajustant autour de ladite âme intérieure (16, 18), caractérisé en ce que le tube métallique cylindrique (12) comprend au moins deux sections métalliques (20) réunies hermétiquement l'une à l'autre pour former ledit tube (12), chaque section métallique (20) étant préfaçonnée par laminage à partir d'un fil métallique recuit et choisi pour avoir une déformation à la limite d'élasticité supérieure à 0,85.

2. Tube selon la revendication 1, dans lequel lesdites sections métalliques sont des sections durcies par précipitation.

3. Tube selon la revendication 1 ou 2, dans lequel lesdites sections métalliques (20) sont formées d'acier inoxydable ou d'un alliage non ferreux.

4. Tube selon la revendication 1, 2, ou 3, dans lequel lesdites sections métalliques sont réunies hermétiquement par des joinss longitudinaux.

5. Tube selon la revendication 3, dans lequel les sections (20) sont fabriquées de manière que les fils métalliques façonnés par laminage forment un tube (12) ayant un diamètre extérieur de 0,110 à 0,120 inch (0,279 à 0,305 cm) avec une épaisseur de paroi d'environ 0,027 inch (0,069 cm) et un diamètre intérieur d'environ 0,06 inch (0,15 cm).

6. Tube selon la revendication 4, dans lequel le tube métallique cylindrique (12) est formé de deux sections (20).

7. Tube selon la revendication 5, dans lequel le tube métallique cylindrique (12) est revêtu d'une couche de métal résistant à la corrosion ou d'une matière plastique résistant aux températures élevées jusqu'à un diamètre extérieur d'environ 0,120 ± 0,001 inch (0,305 ± 0,0025 cm).

8. Tube selon la revendication 4, dans lequel les sections métalliques (20) ont été assemblées par soudage au laser.

9. Tube selon la revendication 3 ou 4, dans lequel le tube métallique cylindrique (12) reçoit un revêtement extérieur formé d'un tube metallique façonné par laminage, ledit tube métallique extérieur étant soudé jusqu'à une profondeur supérieure à sa propre épaisseur.

10. Tube selon la revendication 5 ou 7, dans lequel les fibres optiques sont des fibres optiques monomode.

11. Câble blindé à fibres optiques comprenant un tube central selon la revendication 1, 2, 3, 8, 9 ou 10 et comportant en outre:

au moins six éléments sensiblement pleins (22) enroulés en hélice autour dudit tube central (12) dans un sens donné;

un nombre de fils intérieurs (24) de blindage égal au moins au double du nombre desdits au moins six éléments, enroulés autour desdites et en contact avec lesdits au moins six éléments (22) en une configuration hélicoïdale à une seule couche dans le même sens, ladite configuration hélicoïdale en une seule couche pouvant être obtenue par assemblage desdits au moins six éléments (22) et desdits fils intérieurs (24) de blindage autour dudit tube (12) en même temps, les éléments (22) et les fils intérieurs (24) du même sens et le tube (12) formant un faisceau central (30); et

plusieurs fils extérieurs (32) de blindage en contact avec lesdits fils intérieurs (24) de blindage, lesdits fils extérieurs (32) de blindage étant enroulés dans un sens hélicoïdal opposé au sens desdits fils intérieurs (24) de blindage de manière que les couples exercés par lesdits fils intérieurs de blindage et lesdits fils extérieurs de blindage soient sensiblement équilibrés sous traction.

12. Câble selon la revendication 11, dans lequel lesdits au moins six éléments (22) sont de brins conducteurs d'un conducteur constitué de fils d'acier cuivré.

13. Câble selon la revendication 12, dans lequel le fil intérieur (24) de blindage est un fil d'acier galvanisé.

14. Câble selon la revendication 13, dans lequel les brins conducteurs (22) et les fils intérieurs (24) de blindage forment des espaces interstitiels (28) qui sont occupés par des fibres optiques gainées ou par des charges de fil d'acier galvanisé.

15. Câble selon la revendication 14, dans lequel les fils extérieurs (32) de blindage sont des fils d'acier patentés galvanisés et préfaçonnés.

16. Câble selon la revendication 15, dans lequel lesdits au moins six éléments (22) sont huit éléments.

17. Câble selon la revendication 11, 14, 15 ou 16, dans lequel le tube central (12), les brins conducteurs (22) et les fils intérieurs (24) de blindage sont revêtus d'un composé (26) de charge à base de caoutchouc nitrile.

18. Câble optique blindé selon la revendication 11 et comprenant:

un tube central sensiblement rond, scellé hermétiquement (12), ayant un diamètre extérieur compris entre 0,110 et 0,120 inch (0,279 et 0,305 cm), et un diamètre intérieur d'environ 0,06 inch (0,15 cm), ledit tube (12) renfermant plusieurs fibres optiques (14) noyées dans un élastomère (16, 18);

huit brins conducteurs sensiblement ronds (22) enroulés autour dudit tube central (12) vers la droite et ayant une longueur de pose d'environ 3,5 inches (8,89 cm) et un diamètre de 0,071 inch (0,180 cm) de manière que le diamètre extérieur du tube central et des brins conducteurs soit d'environ 0,262 inch (0,665 cm);

seize brins sensiblement ronds (24) de blindage intérieur en fil d'acier galvanisé ayant un diamètre extérieur d'environ 0,058 inch (0,147 cm) enroulés autour de et en contact avec lesdits brins conducteurs (22), dans le même sens et à la même longueur de pose que lesdits brins conducteurs, lesdits brins conducteurs et lesdits fils de blindage intérieur étant fabriqués au cours de la même opération, ledit tube central (12), lesdits brins conducteurs (22) et lesdits fils de blindage intérieur (24) formant un faisceau central (30) ayant un diamètre extérieur d'environ 0,368 inch (0,935 cm); et

vingt-quatre brins extérieurs sensiblement ronds (32) en fil d'acier galvanisé enroulés autour de et en contact avec lesdits seize brins (24), vers la gauche, avec une longueur de pose de 3,5 inches (8,89 cm), lesdits vingt-quatre brins ayant un diamètre d'environ 0,049 inch (0,124 cm) de manière que le diamètre extérieur total du câble soit d'environ 0,469 inch (1,191 cm).

19. Câble selon la revendication 18, dans lequel

le faisceau central (30) est rempli d'un composé élastomérique (26) de charge.

20. Câble selon la revendication 19, dans lequel les interstices formés entre lesdits brins intérieurs de blindage (24) et lesdits brins extérieurs de blindage (32) sont comblés de fils galvanisés brillants pleins et/ou d'un inhibiteur de corrosion-lubrifiant.

21. Câble selon la revendication 20, dans lequel ledit tube (12) est en outre revêtu d'une couche de métal résistant à la corrosion ou de matière plastique résistant aux hautes températures jusqu'à un diamètre extérieur d'environ 0,120 ± 0,002 inch (0,305 ± 0,005 cm).

22. Câble selon la revendication 21, dans lequel les sections métalliques (20) ont été assemblées par soudage au laser.

23. Procédé pour fabriquer un tube à fibres optiques, scellé hermétiquement, consistant:

(a) à former par laminage d'au moins deux fils métalliques recuits des sections métalliques (20) ayant une déformation à la limite d'élasticité supérieure à 0,85, lesdites sections (20) étant capables d'être ajustées l'une à l'autre pour former un tube métallique cylindrique (12) ayant un diamètre intérieur suffisant pour recevoir au moins une fibre optique tamponnée (14);

(b) à former un tel tube (12) autour d'une ou plusieurs fibres optiques tamponnées (14) à partir des sections métalliques (20) de l'étape (a); et

(c) à joindre hermétiquement lesdites sections (20) l'une à l'autre pour former ledit tube scellé hermétiquement (12).

24. Procédé selon la revendication 23, dans lequel la jonction est réalisée par soudage au laser.

25. Procédé selon la revendication 24, dans lequel le tube (12) contenant les fibres (14) est chauffé entre 300 et 500°F (149 et 260°C) durant la jonction des sections métalliques.

26. Procédé selon la revendication 23, 24 ou 25, dans lequel lesdites sections subissent un durcissement par précipitation avant d'être jointes hermétiquement afin d'augmenter la limite élastique des sections finies.

27. Procédé selon la revendication 23, 24 25 ou 26, dans lequel les fils recuits destinés à former les sections métalliques (20) sont constitués d'acier inoxydable ou d'un alliage non ferreux à haute résistance à la traction.

28. Procédé selon l'une quelconque des revendications 23 à 27 et consistant en outre à injecter un élastomère dans une section (20) et sur lesdites fibres tamponnées (14) avant de former ledit tube (12).

29. Procédé selon l'une quelconque des revendications 23 à 28 et consistant en outre à former un revêtement de matière plastique résistant aux hautes températures autour dudit tube scellé hermétiquement (12).

30. Procédé pour fabriquer un câble optique blindé comprenant un tube central à fibres optiques, scellé hermétiquement, comprenant le procédé selon l'une quelconque des revendications 23 à 29 et consistant en outre:

à enrouler des éléments conducteurs (22) en hélice autour dudit tube (12), ledit enroulement étant d'un sens et d'une longueur de pose donnés;

à enrouler une couche de fils intérieurs (24) de blindage de même sens que lesdits éléments conducteurs (22) et à la même longueur de pose, et appliqués en même temps que lesdits éléments conducteurs, en hélice autour desdits éléments conducteurs (22); et

à appliquer une couche de fils extérieurs (32) de blindage de sens opposé à celui de ladite couche de fils intérieurs (24) de blindage et avec une longueur de pose telle que les couples exercés par lesdits fils intérieurs et extérieurs de blindage soient sensiblement équilibrés lorsque le câble est sous traction.

31. Procédé selon la revendication 30, dans lequel l'application consiste en outre à déposer des éléments de câble dans l'espace interstitiel formé entre lesdits éléments conducteurs (27) et ladite couche de fils intérieurs (24) de blindage en même temps que lesdits éléments conducteurs (22) et ladite couche de fils intérieurs (24) de blindage sont formés.